# FASCICULE DE BREVET EUROPEEN

(11) **EP 4 095 429 B1**
(45) Date de publication et mention de la délivrance du brevet: **13.03.2024**
(21) Numéro de dépôt: 22166428.7
(22) Date de dépôt: 04.04.2022
(51) Int. Cl.: F17C 13/00

(54) **RÉCIPIENT CRYOGÉNIQUE**
KRYOGENER BEHÄLTER
CRYOGENIC CONTAINER

(30) Priorité: 27.05.2021 FR 2105512
(43) Date de publication de la demande: 30.11.2022
(73) Titulaire: Cryolor Société Anonyme, 57640 Argancy (FR); L'Air Liquide, Société Anonyme pour l'Etude et l'Exploitation des Procédés Georges Claude, 75007 Paris (FR)
(72) Inventeur: VARRASSI, Lucien, 57640 ARGANCY (FR); CADEAU, Phillippe, 38360 SASSENAGE (FR)
(74) Mandataire: Air Liquide

(56) Documents cités:
- EP-A1- 2 937 297
- DE-A1-102015 204 618
- DE-T5-112009 002 357
- GB-A- 2 271 839
- US-A- 3 232 065

## Description

L'invention concerne un récipient cryogénique, notamment un réservoir de stockage de fluide cryogénique. Un tel réservoir est connu de GB2271839A.

L'invention concerne plus particulièrement un récipient cryogénique, notamment réservoir de stockage de fluide cryogénique, comprenant une paroi interne délimitant un volume de stockage et une paroi externe disposée autour de la paroi interne avec un espacement inter-parois isolé sous vide, la paroi externe étant munie d'un clapet de surpression configuré pour évacuer la un excès de pression dans l'espacement inter-parois, le clapet de surpression comprenant un capuchon monté mobile relativement à une ouverture communiquant avec l'espacement inter-parois entre une première position refermant l'ouverture et une seconde position ouvrant l'ouverture, le capuchon (6) étant mobile et guidé verticalement entre ses première et seconde positions via un système (9, 10) de guidage situé à l'intérieur de l'ouverture (7), le capuchon (6) étant configuré pour être déplacé vers sa seconde position par une surpression supérieure à un seuil déterminé dans l'espacement (4) l'inter-parois et pour revenir vers sa première position par gravité lorsque la surpression est supérieure audit seuil déterminé.

L'invention concerne en particulier un clapet de surpression pour tout récipient ou appareil cryogénique (fixe ou mobile) et notamment pour les réservoirs de stockage de liquides cryogéniques inflammables (hydrogène notamment).

L'invention permet en particulier de protéger l'enveloppe (paroi) extérieure d'un réservoir fixe ou d'une semi remorque mobile contre une surpression dans l'inter paroi (entre le la paroi interne formant le réservoir intérieur et la paroi formant l'enveloppe extérieure).

En effet, en cas de défaillance et de surpression dans l'inter-parois, il faut pouvoir évacuer cette surpression et éviter ensuite de pomper l'air ambiant lors de la remise sous vide.

Il est notamment important d'éviter de générer un volume de gaz explosif lors d'une fuite de liquide inflammable.

Les clapets de surpression connus (appelés généralement « tape à vide ») sont cependant généralement encombrants, coûteux et insatisfaisant. En particulier, leur mécanisme d'ouverture/fermeture automatique est volumineux et/ou peu fiable.

Un but de la présente invention est de pallier tout ou partie des inconvénients de l'art antérieur relevés ci-dessus.

A cette fin, le récipient selon l'invention, par ailleurs conforme à la définition générique qu'en donne le préambule ci-dessus, est essentiellement caractérisé en ce que le système (9, 10) de guidage comprend un axe (10) solidaire du capuchon (6) et une guide (9) de l'axe (10) monté dans l'ouverture (7).

Par ailleurs, des modes de réalisation de l'invention peuvent comporter l'une ou plusieurs des caractéristiques suivantes :
- le capuchon et/ou l'ouverture comprend un organe d'étanchéité tel qu'un joint assurant, dans sa première position une fermeture étanche de l'ouverture,
- l'organe d'étanchéité est écrasé entre une paroi délimitant l'ouverture et le capuchon dans sa première position,
- le guide de l'axe comprend une pièce tubulaire recevant l'axe en coulissement, ledit guide de l'axe étant maintenu dans l'ouverture via un ensemble de bras support fixé(s) à une paroi délimitant l'ouverture,
- le guide de l'axe assure un guidage de l'axe selon sur une longueur verticale au moins égale à deux fois la dimension transversale de l'axe,
- l'axe comprend un organe de blocage transverse formant une butée limitant la position verticale basse de l'axe,
- le capuchon et/ou le système de guidage comprend une masselotte pour solliciter par gravité le capuchon vers seconde position,
- la masselotte est solidaire de l'axe,
- la masselotte est située à une extrémité inférieure de l'axe et forme une butée limitant la position verticale haute du capuchon,
- l'ouverture est délimitée par une portion tubulaire de paroi(s) raccordée à la paroi externe,
- la portion tubulaire de paroi(s) est verticale et est raccordée à un flanc de la paroi externe via un coude,
- l'extrémité terminale de la portion tubulaire de paroi(s) verticale et située au même niveau ou en-dessous de l'extrémité supérieure de la parois (3) externe,
- le dispositif est un réservoir de stockage de fluide cryogénique, la paroi interne délimitant un volume de stockage pour le fluide,
- le dispositif est une boîte froide d'une installation cryogénique abritant des composants cryogéniques.

L'invention peut concerner également tout dispositif alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :
[Fig. 1] représente une vue en coupe verticale et longitudinale, schématique et partielle, illustrant un exemple de récipient mettant en œuvre l'invention,
[Fig. 2] représente une vue en coupe verticale, schématique et partielle, d'un détail du clapet de surpression du récipient de la [Fig. 1],
[Fig. 3] représente une vue en perspective, schématique, partielle et en transparence, d'un détail du clapet,
[Fig. 4] représente une vue en perspective, schématique et partielle d'une demi-coupe dudit clapet de surpression.

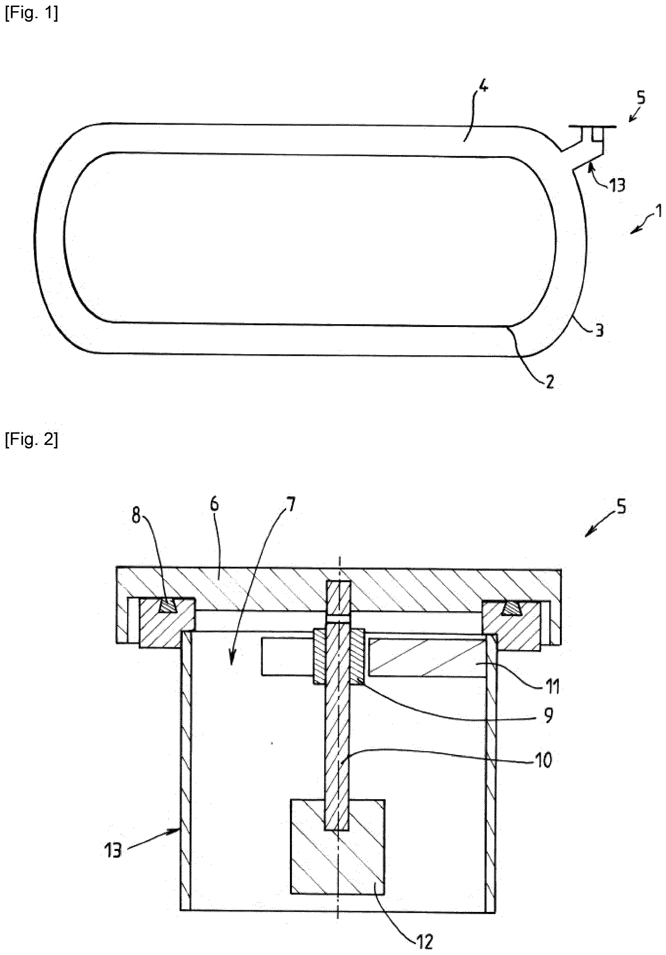

La [Fig. 1] représente un récipient cryogénique constitué d'un réservoir de stockage de fluide cryogénique. Ce réservoir comprend une paroi ou enveloppe interne 2, par exemple de forme générale cylindrique, délimitant un volume de stockage pour du fluide et une paroi 3 externe disposée autour de la paroi interne 2 avec un espacement 4 inter-parois isolé sous vide.

Le réservoir comprend classiquement une circuiterie munie de vanne(s) qui ne sera pas détaillée par soucis de concision.

La paroi externe 3 comprend ouverture 7 refermée par un clapet 5 de surpression configuré pour évacuer un excès de pression dans l'espacement 4 inter-parois en cas de défaillance. L'ouverture 7 est par exemple délimitée par une portion tubulaire 13 de paroi(s) raccordée à la paroi externe 3.

Comme illustré, le clapet 5 de surpression peut être formé à l'extrémité terminale d'une portion tubulaire 13 de paroi(s) qui est verticale en configuration d'utilisation et raccordée à un flanc de la paroi externe 3, par exemple, via un coude.

Le clapet 5 de surpression comprend un capuchon 6, par exemple discoïdale, monté mobile relativement à l'ouverture 7 circulaire qui communique avec l'espacement 4 inter-parois.

Le capuchon 6 est mobile une première position refermant l'ouverture 7 et une seconde position ouvrant l'ouverture 7.

Plus précisément, le capuchon 6 est monté mobile et guidé verticalement entre ses première et seconde positions via un système 9, 10 de guidage situé à l'intérieur de l'ouverture 7 (ou portion tubulaire 13).

Le capuchon 6 est configuré pour être déplacé librement vers seconde position par une surpression supérieure à un seuil déterminé dans l'espacement 4 inter-paroi. C'est-à-dire que, lorsque la pression dans l'inter-parois excède un seuil déterminé, cette pression vient soulever le capuchon pour ouvrir l'ouverture 7.

De même, lorsque cette surpression cesse, le capuchon 6 revient automatiquement vers seconde position par gravité.

Un organe d'étanchéité 8 tel qu'un joint torique peut être prévu sur la bordure de l'ouverture 7 pour assurer fermeture étanche de l'ouverture 7. Le joint 8 est ainsi écrasé lorsque le capuchon 6 est dans sa première position une fermeture sous l'action du vide.

Dans l'exemple illustré, le système de guidage comprend un axe 10 solidaire du capuchon 6 et une guide 9 de l'axe 10 monté dans l'ouverture 7. De préférence le guide 9 est solidaire de l'ouverture. Par exemple, une extrémité supérieure de l'axe 10 est vissé dans le capuchon 6.

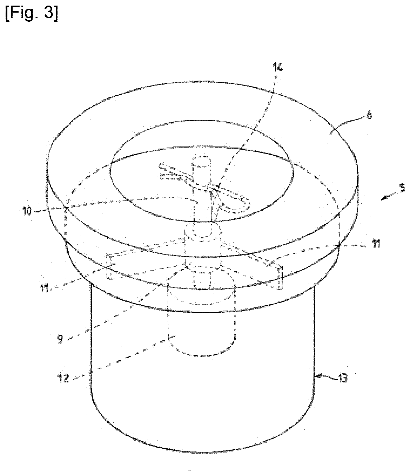

Le guide 9 de l'axe peut comprendre une pièce tubulaire recevant l'axe 9 en coulissement vertical. Ce guide 9 est par exemple maintenu dans l'ouverture 7 (de préférence centré dans la portion tubulaire 13) via un ensemble de bras 11 support fixé(s) à une paroi délimitant l'ouverture 7. Dans l'exemple illustré à la [Fig. 3], par exemple trois bras 11 support sont prévus et répartis à 120 degrés autour du guide. Une extrémité des bras peut être soudée au guide 9 et une autre extrémité des bras 11 peut être soudée à la paroi interne de la portion tubulaire 13.

L'axe 10 est par exemple cylindrique à section en forme de disque. Le guide 9 est de préférence dimensionné pour assurer un guidage de l'axe 10 selon sur une longueur verticale au moins égale à deux fois la dimension transversale (diamètre) de l'axe 10.

De préférence une masselotte 12 est prévue pour contribuer à la fermeture du capuchon 6. La masselotte 12 est située de préférence au niveau d'une seconde extrémité inférieure de l'axe 10. La masselotte 12 et/ou l'axe peut former une excroissance venant en butée contre le guide 9 (ou autre) pour limiter la position haute du capuchon 6 et empêcher sa séparation de l'orifice et du récipient.

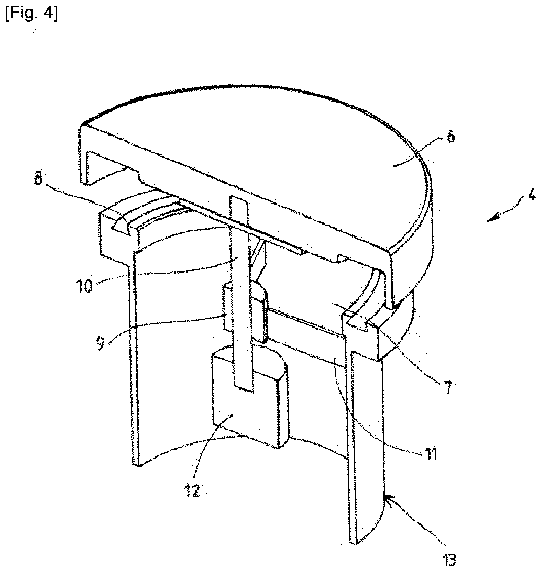

Comme illustré à la [Fig. 4], l'axe 10 peut comprendre un organe 14 de blocage transverse formant une butée limitant la position verticale basse de l'axe 10. Cet organe 14 de blocage, qui peut comprendre une goupille (de préférence élastique) montée au travers de l'axe 10, empêche l'axe 10 de tomber dans l'inter-parois 4 en cas de désolidarisation du capuchon 6. Tout autre organe de blocage transverse peut être envisagé.

Ainsi, le mécanisme de guidage, de rappel et d'attache du couvercle 6 peut être intégré intégralement dans l'orifice 7.

Comme illustré à la [Fig. 1], notamment dans le cas d'un réservoir cryogénique horizontal mobile (semi-remorque ou autre), l'extrémité terminale de la portion tubulaire 13 de paroi(s) verticale est située au même niveau ou en-dessous de l'extrémité supérieure de la parois 3 externe.

Bien entendu, l'invention pourrait s'appliquer à d'autres récipient, notamment à une boîte froide d'une installation cryogénique (liquéfaction par exemple).

## Revendications

1. Récipient (1) cryogénique, notamment réservoir de stockage de fluide cryogénique, comprenant une paroi interne (2) délimitant un volume de stockage et une paroi (3) externe disposée autour de la paroi interne (2) avec un espacement (4) inter-parois isolé sous vide, la paroi externe (3) étant munie d'un clapet (5) de surpression configuré pour évacuer un excès de pression dans l'espacement (4) inter-parois, le clapet (5) de surpression comprenant un capuchon (6) monté mobile relativement à une ouverture (7) communiquant avec l'espacement (4) inter-parois entre une première position refermant l'ouverture (7) et une seconde position ouvrant l'ouverture (7), le capuchon (6) étant mobile et guidé verticalement entre ses première et seconde positions via un système (9, 10) de guidage situé à l'intérieur de l'ouverture (7), le capuchon (6) étant configuré pour être déplacé vers sa seconde position par une surpression supérieure à un seuil déterminé dans l'espacement (4) inter-parois et pour revenir vers sa première position par gravité lorsque la surpression est supérieure audit seuil déterminé, **caractérisé en ce que** le système (9, 10) de guidage comprend un axe (10) solidaire du capuchon (6) et un guide (9) de l'axe (10) monté dans l'ouverture (7).

2. Récipient selon la revendication 1, **caractérisé en ce que** le capuchon (6) et/ou l'ouverture (7) comprend un organe d'étanchéité (8) tel qu'un joint assurant, dans sa première position une fermeture étanche de l'ouverture (7).

3. Récipient selon la revendication 2, **caractérisé en ce que** l'organe d'étanchéité (8) est écrasé entre une paroi délimitant l'ouverture et le capuchon (6) dans sa première position.

4. Récipient selon l'une quelconque des revendications 1 à 3, **caractérisé en ce que** le guide (9) de l'axe comprend une pièce tubulaire recevant l'axe (10) en coulissement, ledit guide (9) de l'axe (10) étant maintenu dans l'ouverture via un ensemble de bras (11) support fixé(s) à une paroi délimitant l'ouverture (7) .

5. Récipient selon l'une quelconque des revendications 1 à 4, **caractérisé en ce que** le guide (9) de l'axe (10) assure un guidage de l'axe (10) sur une longueur verticale au moins égale à deux fois la dimension transversale de l'axe (10).

6. Récipient selon l'une quelconque des revendications 1 à 5, **caractérisé en ce que** l'axe (10) comprend un organe (14) de blocage transverse formant une butée limitant la position verticale basse de l'axe (10).

7. Récipient selon l'une quelconque des revendications 1 à 6, **caractérisé en ce que** le capuchon (6) et/ou le système (9, 10) de guidage comprend une masselotte (12) pour solliciter par gravité le capuchon (6) vers seconde position.

8. Récipient selon l'une quelconque des revendications 1 à 6, combinée à la revendication 7, **caractérisé en ce que** la masselotte (12) est solidaire de l'axe (10).

9. Récipient selon la revendication 8, **caractérisé en ce que** la masselotte (12) est située à une extrémité inférieure de l'axe (10) et forme une butée limitant la position verticale haute du capuchon (6).

10. Récipient selon l'une quelconque des revendication 1 à 9, **caractérisé en ce que** l'ouverture (7) est délimitée par une portion tubulaire (13) de paroi(s) raccordée à la paroi externe (3) .

11. Récipient selon l'une quelconque des revendications 1 à 10, **caractérisé en ce que** la portion tubulaire (13) de paroi(s) est verticale et est raccordée à un flanc de la paroi externe (3) via un coude.

12. Récipient selon la revendication 11, **caractérisé en ce que** l'extrémité terminale de la portion tubulaire (13) de paroi(s) verticale est située au même niveau ou en-dessous de l'extrémité supérieure de la parois (3) externe.

13. Récipient selon l'une quelconque des revendications 1 à 12, **caractérisé en ce qu'**il est un réservoir de stockage de fluide cryogénique, la paroi interne (2) délimitant un volume de stockage pour le fluide.

14. Récipient selon l'une quelconque des revendications 1 à 13, **caractérisé en ce qu'**il est une boîte froide d'une installation cryogénique abritant des composants cryogéniques.

## Patentansprüche

1. Kryogener Behälter (1), insbesondere Lagertank für kryogenes Fluid, der eine Innenwand (2) aufweist, die ein Speichervolumen begrenzt, und eine Außenwand (3), die um die Innenwand (2) herum mit einem vakuumisolierten Zwischenwandabstand (4) angeordnet ist, wobei die Außenwand (3) mit einem Überdruckventil (5) versehen ist, das so konfiguriert ist, dass es einen Drucküberschuss in dem Zwischenwandabstand (4) ableitet, wobei das Überdruckventil (5) eine Kappe (6) aufweist, die relativ zu einer Öffnung (7), die mit dem Zwischenwandabstand (4) in Verbindung steht, zwischen einer ersten Position, in der die Öffnung (7) geschlossen wird, und einer zweiten Position, in der die Öffnung (7) geöffnet wird, beweglich angebracht ist, wobei die Kappe (6) beweglich ist und über ein Führungssystem (9, 10), das sich im Inneren der Öffnung (7) befindet, vertikal zwischen ihrer ersten und zweiten Position geführt wird, wobei die Kappe (6) so konfiguriert ist, dass sie durch einen Überdruck in dem Zwischenwandabstand, der größer als ein bestimmter Schwellenwert (4) ist, in ihre zweite Position verschoben wird und durch Schwerkraft in ihre erste Position zurückkehrt, sobald der Überdruck größer als der bestimmte Schwellenwert ist, **dadurch gekennzeichnet, dass** das Führungssystem (9, 10) eine fest mit der Kappe (6) verbundene Achse (10) und eine in der Öffnung (7) montierte Führung (9) für die Achse (10) aufweist.

2. Behälter nach Anspruch 1, **dadurch gekennzeichnet, dass** die Kappe (6) und/oder die Öffnung (7) ein Dichtungsorgan (8) wie eine Dichtung aufweist, das in seiner ersten Position einen dichten Verschluss der Öffnung (7) gewährleistet.

3. Behälter nach Anspruch 2, **dadurch gekennzeichnet, dass** das Dichtungsorgan (8) in seiner ersten Position zwischen einer die Öffnung begrenzenden Wand und der Kappe (6) zusammengedrückt wird.

4. Behälter nach einem der Ansprüche 1 bis 3, **dadurch gekennzeichnet, dass** die Führung (9) der Achse ein röhrenförmiges Teil aufweist, das die Achse (10) gleitend aufnimmt, wobei die Führung (9) der Achse (10) über eine Anordnung von Tragarmen (11) in der Öffnung gehalten wird, die an einer die Öffnung (7) begrenzenden Wand befestigt ist/sind.

5. Behälter nach einem der Ansprüche 1 bis 4, **dadurch gekennzeichnet, dass** die Führung (9) der Achse (10) eine Führung der Achse (10) über eine vertikale Länge gewährleistet, die mindestens dem Zweifachen der Querabmessung der Achse (10) entspricht.

6. Behälter nach einem der Ansprüche 1 bis 5, **dadurch gekennzeichnet, dass** die Achse (10) ein quer verlaufendes Sperrorgan (14) aufweist, das einen Anschlag bildet, der die untere vertikale Position der Achse (10) begrenzt.

7. Behälter nach einem der Ansprüche 1 bis 6, **dadurch gekennzeichnet, dass** die Kappe (6) und/oder das Führungssystem (9, 10) ein Gewicht (12) zum Vorspannen der Kappe (6) durch Schwerkraft in Richtung der zweiten Position aufweist.

8. Behälter nach einem der Ansprüche 1 bis 6 in Kombination mit Anspruch 7, **dadurch gekennzeichnet, dass** das Gewicht (12) fest mit der Achse (10) verbunden ist.

9. Behälter nach Anspruch 8, **dadurch gekennzeichnet, dass** das Gewicht (12) an einem unteren Ende der Achse (10) angeordnet ist und einen Anschlag bildet, der die obere vertikale Position der Kappe (6) begrenzt.

10. Behälter nach einem der Ansprüche 1 bis 9, **dadurch gekennzeichnet, dass** die Öffnung (7) durch einen röhrenförmigen Wandabschnitt (13) begrenzt wird, der mit der Außenwand (3) verbunden ist.

11. Behälter nach einem der Ansprüche 1 bis 10, **dadurch gekennzeichnet, dass** der röhrenförmige Wandabschnitt (13) vertikal ist und über eine Biegung mit einer Flanke der Außenwand (3) verbunden ist.

12. Behälter nach Anspruch 11, **dadurch gekennzeichnet, dass** das Abschlussende des vertikalen röhrenförmigen Wandabschnitts (13) auf derselben Höhe oder unterhalb des oberen Endes der Außenwand (3) angeordnet ist.

13. Behälter nach einem der Ansprüche 1 bis 12, **dadurch gekennzeichnet, dass** er ein Lagertank für kryogenes Fluid ist, wobei die Innenwand (2) ein Speichervolumen für das Fluid begrenzt.

14. Behälter nach einem der Ansprüche 1 bis 13, **dadurch gekennzeichnet, dass** es sich um eine Cold Box einer kryogenen Anlage handelt, in der kryogene Komponenten untergebracht sind.

## Claims

1. Cryogenic container (1), in particular tank for storing cryogenic fluid, comprising an internal wall (2) delimiting a storage volume and an external wall (3) disposed around the internal wall (2) with a vacuum-insulated inter-wall space (4), the external wall (3) being provided with an overpressure valve (5) configured to discharge excess pressure in the inter-wall space (4), the overpressure valve (5) comprising a cap (6) which is mounted so as to be movable, relative to an opening (7) that communicates with the inter-wall space (4), between a first position closing the opening (7) and a second position opening the opening (7), the cap (6) being movable and guided vertically between its first and second positions via a guide system (9, 10) situated inside the opening (7), the cap (6) being configured to be moved towards its second position by an overpressure greater than a determined threshold in the inter-wall space (4), and to return towards its first position by gravity when the overpressure is greater than said determined threshold, **characterized in that** the guide system (9, 10) comprises a shaft (10) secured to the cap (6), and a guide (9) of the shaft (10) mounted in the opening (7).

2. Container according to Claim 1, **characterized in that** the cap (6) and/or the opening (7) comprise/comprises a sealing member (8) such as a seal ensuring that the opening (7) is tightly closed in its first position.

3. Container according to Claim 2, **characterized in that** the sealing member (8) is compressed between a wall delimiting the opening and the cap (6) in its first position.

4. Container according to any one of Claims 1 to 3, **characterized in that** the guide (9) of the shaft comprises a tubular part which receives the shaft (10) in a sliding manner, said guide (9) of the shaft (10) being held in the opening via a set of support arms (11) that are fastened to a wall delimiting the opening (7).

5. Container according to any one of Claims 1 to 4, **characterized in that** the guide (9) of the shaft (10) guides the shaft (10) along a vertical length equal to at least two times the transverse dimension of the shaft (10) .

6. Container according to any one of Claims 1 to 5, **characterized in that** the shaft (10) comprises a transverse blocking member (14) forming a stop that limits the bottom vertical position of the shaft (10).

7. Container according to any one of Claims 1 to 6, **characterized in that** the cap (6) and/or the guide system (9, 10) comprise/comprises a flyweight (12) in order to urge the cap (6) towards the second position by gravity.

8. Container according to any one of Claims 1 to 6, combined with Claim 7, **characterized in that** the flyweight (12) is secured to the shaft (10).

9. Container according to Claim 8, **characterized in that** the flyweight (12) is situated at a lower end of the shaft (10) and forms a stop that limits the top vertical position of the cap (6).

10. Container according to any one of Claims 1 to 9, **characterized in that** the opening (7) is delimited by a tubular wall portion (13) connected to the external wall (3) .

11. Container according to any one of Claims 1 to 10, **characterized in that** the tubular wall portion (13) is vertical and is connected to a flank of the external wall (3) via a bend.

12. Container according to Claim 11, **characterized in that** the terminal end of the vertical tubular wall portion (13) is situated at the same level as or below the upper end of the external wall (3).

13. Container according to any one of Claims 1 to 12, **characterized in that** it is a tank for storing cryogenic fluid, the internal wall (2) delimiting a storage volume for the fluid.

14. Container according to any one of Claims 1 to 13, **characterized in that** it is a cold box of a cryogenic installation housing cryogenic components.
